# EUROPEAN PATENT SPECIFICATION

(11) **EP 0 647 997 B1**
(45) Date of publication and mention of the grant of the patent: **05.03.1997**
(21) Application number: 94100179.4
(22) Date of filing: 07.01.1994
(51) Int. Cl.: H02B 1/26, H02B 1/20

(54) **Casing for through cables particularly for mounting on electric panel boards**
Gehäuse für Durchführungskabel insbesondere zur Montage an einem elektrischen Schaltbrett
Boîtier traversé par des câbles notamment pour le montage sur des panneaux électriques

(30) Priority: 05.10.1993 IT MI930768
(43) Date of publication of application: 12.04.1995
(73) Proprietor: INDUSTRIA LOMBARDA MATERIALE ELETTRICO I.L.M.E. S.P.A., I-20149 Milano (IT)
(72) Inventor: Percio, Andrea, 20149 Milano (IT); Zago, Giovanni, 20128 Milano (IT)
(74) Representative: Petruzziello, Aldo

(56) References cited:
- EP-A- 0 430 016
- DE-A- 4 302 650
- FR-A- 2 132 821

## Description

The present invention refers to a casing for through cables to be mounted in particular onto electric panel boards, which usually accompany operator machine tools, such as printers, electronic devices etc., in which the cables must not be sectionized.

As is known, at present electric panel boards are already provided with openings, in correspondence with which standardized multipolar connectors are fixed, into which the cables are sectionized.

If such openings do not have to be used they are closed with suitable plates.

A proposal has also been made to position casings for through cables in correspondence with such openings, whose task is to allow the passage of cables which must not be sectionized, holding them blocked in position.

For this purpose a frame is used fixed in correspondence with the opening, provided with hooking means for a casing for the passage of cables which substantially has the same configuration as the multipolar connectors.

The casings for through cables proposed, however, are complicated structurally and not easy to assemble and mount. In addition, the preparation for the passage of the cable or cables in them is carried out by working in rather precarious conditions, supporting the whole casing, which is fairly heavy, since it has an outer metallic covering.

An example of a prior art casing for through cables is disclosed in EP-A-430016.

The aim of the invention is to eliminate the above-mentioned drawbacks by providing a casing for through cables, which is easy to realize and allows the cable chock part real and proper to be preassembled in extremely easy conditions, and the protective outer casing to be mounted afterwards.

This aim is achieved with the casing for through cables according to the invention, which comprises two inner half cheeks, conveniently of plastic material, perfectly equal to each other, comprising means for reciprocal fixing and clamping of the cables, and two protective outer half shells, conveniently of metallic material, these also being substantially equal to each other and each being suitable for housing a respective half cheek, fixing being carried out by means of screws which engage the two outer half shells between them.

The said cable clamping means conveniently consist of pairs of tabs diverging in opposite directions, which close elastically onto the cable, pressing on it, with the help also of corresponding teeth foreseen inside the corresponding protective half shell.

Each outer half shell has a pair of pins suitable for being engaged by hooking means provided on a frame which is fixed in correspondence with an opening foreseen in the panelboard.

Further characteristics of the invention will be made clearer by the detailed description given below, referring to one of its merely exemplary and therefore not restrictive embodiments, illustrated in the appended drawings, and in which:
figure 1 is an axonometric view of a casing for through cables, mounted on a wall of an electric panelboard;
figure 2 is a partially broken off exploded view of the casing for through cables in figure 1;
figure 3 is a median section of the assembled casing for through cables, taken along plane III-III in figure 2;
figure 4 is a plan view from the inside of one half of the casing for through cables according to the invention.
figures 5 and 6 are a back view and a front view respectively of the casing for through cables, with the outer protective cover removed.

With reference to the appended figures, the casing for through cables according to the invention is shown as a whole with reference numeral 1. It is fixed to a wall 2 of an electric panel board, by positioning a support frame 3 in correspondence with an opening (not illustrated) made in the wall 2. The blocking of the casing 1 to the frame 3 takes place by means of hooks 4 foreseen on the latter, which come into engagement with corresponding pins 5 projecting from the casing.

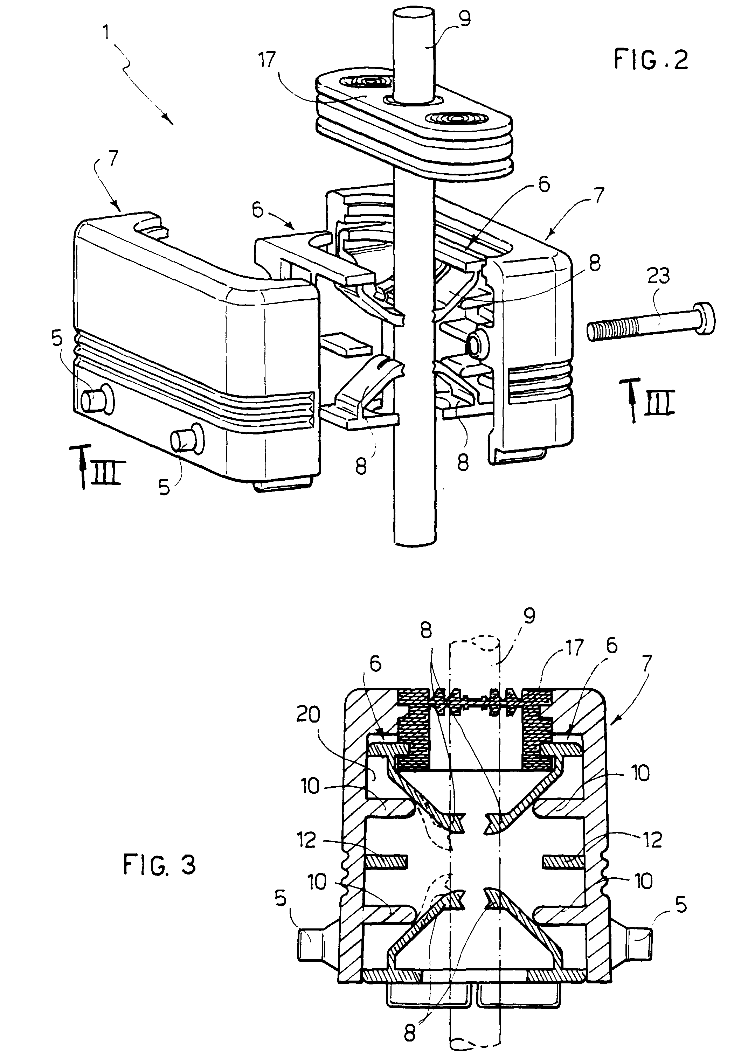

The casing 1 properly speaking is realized in two halves (see in particular figures 2 and 3) which are substantially equal to each other.

Each half of the casing comprises an inner half cheek 6, which is conveniently made from plastic material, and a protective outer half shell 7, conveniently made of metallic material, on the outside of which protrude the said pins 5.

The two half cheeks 6 are equal to each other and each have pairs of elastic tabs 8 inclined in opposite directions, suitable for clamping a cable 9 between them. In order to press each tab 8 harder against the cable 9 to be clamped, inside the respective half shell 7 a corresponding locator tooth 10 is foreseen, against which the flexible tab 8 abuts, as is more clearly shown in diagrammatic form in figure 3.

Transverse stiffening walls 11 are foreseen between each pair of tabs 8 of a half cheek 6, and an additional longitudinal stiffening wall 12 is positioned between the tabs of each pair.

The two half cheeks 6 are joined together by the engagement of a pair of elastic teeth 13 positioned in one of the half cheeks, which move to engage in a corresponding check hole 14 foreseen in the other half cheek, and viceversa.

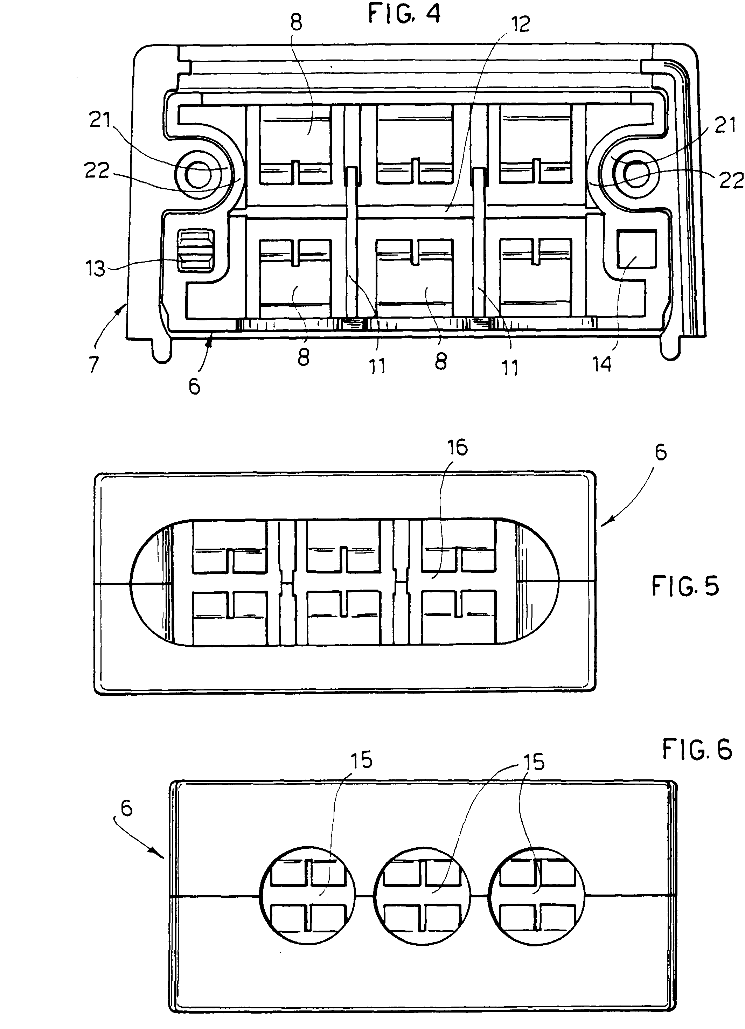

When joined, the two half cheeks 6 form a series of holes 15 (figure 6) on the part facing the frame 3, and a wide oval longitudinal opening 16 (figure 5) on the opposite part, and a rubber gasket 17 is positioned in correspondence with such opening, with removable discs 18 and breakage lines 19 in correspondence with such disks, to facilitate the insertion of the cable 9.

Each half shell 7 has an inner seat 20 for housing a corresponding half cheek 6, and bushes 21, engaging with corresponding recesses 22 of the respective half cheek 6, for centring and guiding the latter.

The fastening together of the two half shells 7 is carried out by means of a pair of screws 23.

With the casing for through cables according to the invention it is possible to carry out preassembling, inserting the cable or cables between the two half cheeks 6, after placing the gasket 17 between them also, and to block such half cheeks by the engagement of the elastic teeth 13 with the corresponding holes 14.

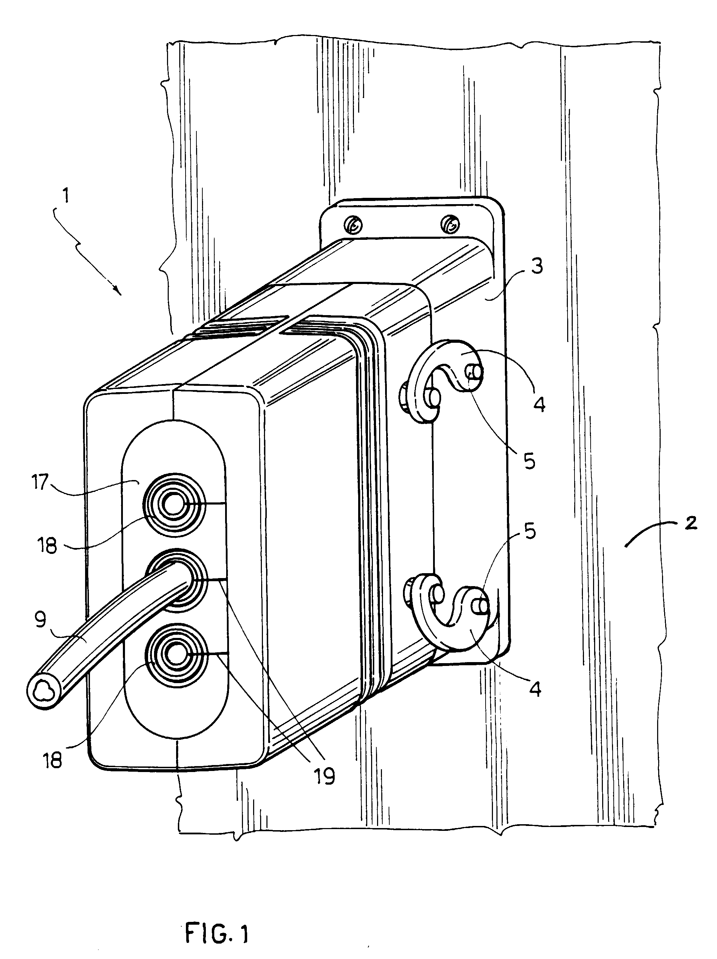

Afterwards the two protective outer shells 7 are applied and fastened to each other by means of the screws 23, and then the whole is mounted onto the support frame 3 and fixed by means of cam hooks 4, which engage with the pins 5, as shown in figure 1.

## Claims

1. A casing for through cables, particularly for mounting on electric panel boards, comprising a frame (3) fixed in correspondence with an opening of a wall (2) of the board, and a casing real and proper (1) able to be fixed to the frame (3) and provided with means for the passage and blocking of the cables 9, characterized in that the said casing (1) comprises a pair of half cheeks (6) provided with reciprocal hooking means (13, 14) and with opposed elastic tabs (8) for clamping the cables (9) and a pair of protective outer half shells (7), housing the said half cheeks (6) and able to be fastened to each other, by the coupling together of the said half cheeks (6), at the two opposed sides of the casing, determining respective holes (15), (16) for the passage of the cables (9).

2. A casing according to claim 1, characterized in that the said elastic tabs (8) foreseen inside each half cheek (6) are arranged in pairs inclined in opposite directions.

3. A casing according to claim 2, characterized in that inside each half shell (7) rigid protruding teeth are foreseen acting as abutment elements for respective elastic tabs (8).

4. A casing according to claim 1, characterized in that the said engaging means foreseen on the half cheeks (6) consist of elastic teeth (13) and corresponding holes (14).

5. A casing according to claim 1, characterized in that the said hole (16) is an oval hole elongated in the longitudinal direction of the cable chock, and houses a sealing gasket (17), having removable discs (18) and breakage lines (19) for easing the insertion of the cables (9).

6. A casing according to any one of the previous claims, characterized in that the said inner half cheeks (6) are perfectly equal to each other and the said outer half shells (7) are substantially equal to each other.

7. A casing according to any one of the previous claims, characterized in that the said half cheeks (6) are of plastic material and the said half shells (7) of metallic material.

8. A casing according to claim 1, characterized in that the fastening of the casing (1) to the frame (3) is carried out by the engagement of cam hooks (4) hinged to the frame (3) with pins (5) projecting outwards from the half shells (7) of the casing (1).

9. A casing according to any one of the previous claims, characterized in that it allows preassembling of the half cheeks (6) with the through cables and mounting of the outer half shells (7) afterwards.

## Patentansprüche

1. Gehäuse für Durchfürungskabel, insbesondere zur Montage auf elektrischen Schaltbrett, mit einem Rahmen (3) vorgesehen, der an einer Öffnung (2) des elektrischen Schaltbretts befestigt wird und mit einem eigentlichen Gehäuse (1), das am Rahmen (3) befestigt werden kann, und mit Vorrichtungen versehen zur Durchführung und Blockierung der Kabel (9), dadurch gekennzeichnet, daß das Gehäuse (1) enthält ein Paar Halbbacken (6) mit Vorrichtungen vorgesehen für ein gegenseitiges Verkoppeln (13,14) und mit elastischen gegenüberliegenden Klappen (8) zum Spannen der Kabel (9) und mit einem Paar externer Schutzhalbschalen (7) versehen, die die Halbbacken umspannen (6) und miteinander befestigt werden können, nachdem die Halbbacken verkoppelt worden sind (6), wobei an den beiden gegenüberliegenden Seiten des Gehäuses entsprechende Löcher (15), (16) zur Durchführung der Kabel (9) entstehen.

2. Gehäuse nach Anspruch 1, dadurch gekennzeichnet, daß die oben genannte elastische Klappen (8) als geneigte gegenüberliegende im Inneren jeder Halbbacken (6) vorgesehene Paare angeordnet sind.

3. Gehäuse nach Anspruch 2, dadurch gekennzeichnet, daß im Innneren einer jeden Halbschale (7) harte herausstehende Zähnchen vorgesehen sind, die als Kontrastelemente für die jeweiligen elastischen Klappen (8) agieren.

4. Gehäuse nach Anspruch 1, dadurch gekennzeichnet, daß die auf den Halbbacken (6) vorgesehenen Vorrichtungen aus elastischen Zähnchen (13) und entsprechenden Löchern (14) bestehen.

5. Gehäuse nach Anspruch 1, dadurch gekennzeichnet, daß das oben genannte Loch (16) oval, in der vertikalen Richtung des Kabeldurchganges verlängert und mit einer Haltedichtung (17) versehen ist, die über entfernbare Scheiben (18) und Schlitze (19) verfügt, um die Kabeldurchführung zu erleichtern (9).

6. Gehäuse nach einem der vorhergehenden Ansprüche, dadurch gekennzeichnet, daß die oben genannte innere Halbbacken (6) perfekt gleich und die oben genannte externe Halbschalen (7) grundsätzlich gleich sind.

7. Gehäuse nach einem der vorhergehenden Ansprüche, dadurch gekennzeichnet, daß die oben genannte Halbbacken (6) aus Plastikmaterial und die oben genannte Halbschalen (7) aus Metall sind.

8. Gehäuse nach Anspruch 1, dadurch gekennzeichnet, daß die Befestigung des Gehäuses (1) an den Rahmen (3) mittels Nockenhaken (4) erfolgt, die am Rahmen (3) mit Haken (5) festgemacht sind und außerhalb der externen Halbschalen (7) des Gehäuses (1) herausragen.

9. Gehäuse nach einem der vorhergehenden Ansprüche, dadurch gekennzeichnet, daß es ermöglicht, zuerst die Halbbacken (6) mit den durchlaufenden Kabeln und dann die externen Halbschalen (7) zu montieren.

## Revendications

1. Boîtier pour câbles passants, en particulier pour le montage sur des armoires pour panneaux électriques, comprenant un châssis (3) fixé au niveau d'une ouverture d'une paroi (2) de l'armoire, et un veritable boîtier (1) pouvant être fixé au châssis (3) et équipé de dispositifs pour le passage et le blocage de câbles (9), caractérisé par le fait que ce boîtier (1) comprend une paire de demi-joues (6), munies de dispositifs d'accrochage réciproque (13, 14) et d'ailettes élastiques opposées (8) pour le serrage des câbles (9), et une paire de demi-coques extérieures de protection (7), logeant les susdites demi-joues (6) et pouvant être fixées l'une à l'autre, après l'accouplement des deux demi-joues (6), aux deux côtés opposés du boîtier où se forment les trous respectifs (15), (16) pour le passage des câbles (9).

2. Boîtier selon la revendication 1, caractérisé par le fait que lesdites ailettes élastiques (8) prévues à l'intérieur de chaque demi-joue (6) sont disposées par paires inclinées dans des directions opposées.

3. Boîtier selon la revendication 2, caractérisé par le fait qu'à l'intérieur de chaque demi-coque (7) sont prévues des dents rigides dépassantes qui servent d'éléments de contraste pour les ailettes élastiques respectives (8).

4. Boîtier selon la revendication 1, caractérisé par le fait que les dispositifs d'accrochage prévus sur les demi-joues (6) sont formés par des dents élastiques (13) et par les trous correspondants (14).

5. Boîtier selon la revendication 1, caractérisé par le fait que ledit trou (16) est un trou ovale allongé dans la direction longitudinale du serre-câble et loge un joint d'étanchéité (17) présentant des disques amovibles (18) et des lignes de rupture (19) pour faciliter l'introduction des câbles (9).

6. Boîtier selon une revendication quelconque des précédentes, caractérisé par le fait que les demi-joues intérieures (6) sont parfaitement égales entre elles, les demi-coques extérieures (7) étant substantiellement égales entre elles.

7. Boîtier selon une revendication quelconque des précédentes, caractérisé par le fait que les demi-joues (6) sont en matière plastique et que les demi-coques (7) sont en matière métallique.

8. Boîtier selon la revendication 1, caractérisé par le fait que la fixation du boîtier (1) au châssis (3) s'effectue par accrochage de crochets à came (4) fixés par des charnières au châssis (3) à l'aide de chevilles (5) dépassant extérieurement des demi-coques extérieures (7) du boîtier (1).

9. Boîtier selon une revendication quelconque des précédentes, caractérisé par le fait qu'il permet un préassemblage des demi-joues (6) avec les câbles passants et un montage successif des demi-coques extérieures (7).
